# DEMANDE DE BREVET EUROPEEN

(11) **EP 0 995 932 A1**
(43) Date de publication de la demande: **26.04.2000**
(21) Numéro de dépôt: 99402525.2
(22) Date de dépôt: 14.10.1999
(51) Int. Cl.: F16J 15/32, F16J 15/56

(54) **Cartouche d'étanchéité**

(30) Priorité: 20.10.1998 FR 9813110
(71) Demandeur: France-Joint S.A., 85610 Cugand (FR)
(72) Inventeur: Cabardis, Bernard, 85530 La Bruffière (FR)
(74) Mandataire: Viard, Jean

(57) **Abrégé**

- Cartouche monobloc d'étanchéité et de guidage comprenant un manchon métallique ou plastique (1) à l'intérieur duquel sont inclus un joint d'étanchéité dynamique (4), un joint d'étanchéité statique (3) formant racleur de tige et une bague de guidage (2).

## Description

La présente invention a pour objet une cartouche d'étanchéité et de guidage destinée en particulier, mais non exclusivement, aux vérins hydrauliques ou pneumatiques.

On sait que dans de tels appareils, une tige ou organe mobile est entraînée d'un mouvement généralement alternatif à l'intérieur d'un cylindre ou organe fixe. Compte tenu de la présence d'un fluide moteur dans le cylindre, il est nécessaire d'assurer l'étanchéité de la tige par rapport au cylindre. Ce résultat est obtenu classiquement en montant à l'intérieur du cylindre des joints qui sont écrasés contre la tige.

Il a déjà été proposé de monter les joints sur un pièce spécialisée qui doit comprendre une gorge pour un joint racleur, une gorge pour un bague de guidage, une gorge pour monter un joint de tige, une gorge pour monter un joint d'étanchéité statique. Une telle pièce est d'un usinage compliqué et la fixation des joints est en général mal assurée. De telles pièces sont connues, par exemple par DE-A 4 105 006 et par GB-A-2 185 545 ou US-A-3 559 540.

Un premier objet de l'invention est de pallier cet inconvénient et de proposer une cartouche d'étanchéité et de guidage monobloc, qui se monte directement à l'intérieur de l'organe fixe.

Selon l'invention, la cartouche d'étanchéité et de guidage est caractérisée en ce que qu'elle comprend un manchon à l'intérieur duquel est inclus au moins un élément d'étanchéité et/ou de guidage. tels qu'un joint d'étanchéité dynamique, un joint d'étanchéité statique formant racleur de tige et une bague de guidage.

Ainsi, toutes les fonctions à assurer : étanchéité de tige, guidage de la tige, raclage de la tige, étanchéité statique le sont par une seule cartouche.

D'autres caractéristiques et avantages de l'invention apparaîtront au cours de la description qui va suivre d'un mode particulier de réalisation, donné uniquement à titre d'exemple non limitatif, en regard des dessins qui représentent :
- la figure 1, une vue en perspective d'une cartouche selon l'invention;
- la figure 2, une vue en coupe transversale selon la ligne II-II de la figure 1, d'un côté de la cartouche.

Dans l'exemple représenté, la cartouche est destinée à être montée dans le nez d'un vérin hydraulique ou pneumatique à l'intérieur duquel elles est assujettie par tout moyen approprié tel que vissage; enclipsage ou sertissage. Mais, bien entendu, l'invention peut être appliquée dans tout autre domaine pour assurer l'étanchéité et le guidage d'un organe mobile dans un organe fixe. Sur les figures, les mêmes références désignent les mêmes éléments.

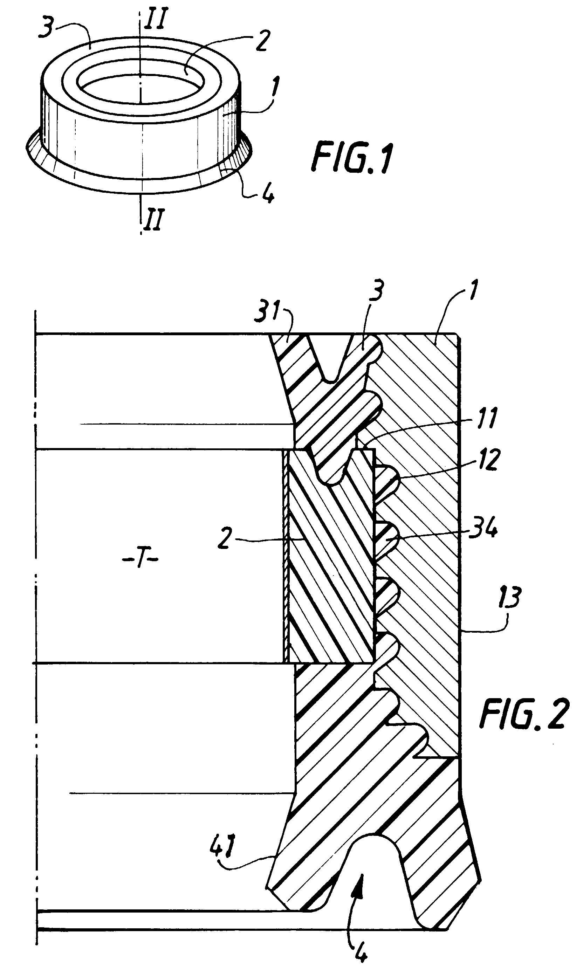

Sur la figure 1, on voit que la cartouche intègre un manchon cylindrique 1 métallique, par exemple en acier, ou en matière plastique moulée ou usinée telle qu'une résine acétal, par exemple, une bague interne de guidage 2, par exemple en résine acétal, résine phénolique ou autre, un joint supérieur 3 et un joint inférieur 4. Pratiquement, et comme cela sera décrit ultérieurement, les joints 3 et 4 sont constitués par une seule et même pièce, par exemple en polyuréthanne. Le joint en "V" 3 assure la fonction d'étanchéité statique et joue le rôle d'un racleur par portée de sa lèvre interne 31 sur la tige T de vérin alors que le joint en "V" 4 assure l'étanchéité dynamique.

La structure de la cartouche apparaît mieux sur la figure 2 qui est une coupe radiale de la cartouche. Le manchon 1 présente dans sa surface interne un logement 11 destiné à recevoir la partie supérieure de la bague de guidage 2, et un ensemble de rainures 34 communiquant entre elles, pouvant être constituées par une simple rainure hélicoïdale.

Le procédé de fabrication est le suivant. Après usinage ou moulage du manchon 1, on introduit, à l'intérieur de celui-ci la bague de guidage 2 en la faisant glisser jusqu'à ce que son extrémité supérieure, sur la figure, vienne en butée contre le logement 11. Après quoi, l'ensemble est introduit dans le moule d'injection servant à former le joint supérieur 3 et le joint inférieur 4. Durant cette injection, la matière plastique pénètre dans les rainures 34 et immobilise la bague 2 par rapport au manchon 1 simultanément à la formation des joints 3,4 avec leurs lèvres intérieures 31 et 41. Mais les joints montés peuvent également être des joints compacts tels que des « O » rings.

La surface externe 13 du manchon 1 qui est cylindrique et rectiligne sur la figure 2 peut présenter un filetage ou toute autre configuration destinée à permettre sa fixation dans l'organe fixe.

Bien entendu, la structure de la cartouche peut être adaptée à l'application à laquelle elle est destinée et elle peut comprendre plus de deux joints ou plus d'une bague de guidage.

Il va de soi que de nombreuses variantes peuvent être apportées, notamment par substitution de moyens techniques équivalents, sans sortir pour cela du cadre de l'invention.

## Revendications

1. Cartouche monobloc d'étanchéité et de guidage caractérisée en ce que qu'elle comprend un manchon (1) à l'intérieur duquel est inclus au moins un élément d'étanchéité et/ou de guidage (2,3,4) moulé par injection en une seule pièce, assurant l'intégration de la cartouche.

2. Cartouche selon la revendication 1 utilisée avec un vérin, caractérisée en ce qu'elle inclût: un joint d'étanchéité statique (3) formant racleur de tige, un joint d'étanchéité dynamique (4) et une bague de guidage (2), les joints (3,4) étant des joints moulés par injection.

3. Cartouche selon la revendication 1 ou 2, caractérisée en ce que les joints (3,4) sont des joints compacts ou à lèvre.

4. Cartouche selon l'une des revendications précédentes, caractérisée en ce que le manchon (1) comprend des rainures (34) de passage de la matière plastique injectée.

5. Cartouche selon la revendication 1, caractérisée en ce que le manchon (1) est métallique.

6. Cartouche selon la revendication 1, caractérisée en ce que le manchon (1) est réalisé par moulage ou usinage d'une matière plastique.
